# FASCICULE DE BREVET EUROPEEN

(11) **EP 2 674 724 B1**
(45) Date de publication et mention de la délivrance du brevet: **30.05.2018**
(21) Numéro de dépôt: 13164840.4
(22) Date de dépôt: 23.04.2013
(51) Int. Cl.: G01D 3/08

(54) **Détecteur à sortie astable**
Sensor mit astabilem Output
Detector with astable output

(30) Priorité: 14.05.2012 FR 1254374
(43) Date de publication de la demande: 18.12.2013
(73) Titulaire: Schneider Electric Industries SAS, 92500 Rueil-Malmaison (FR)
(72) Inventeur: Bernard, Jacques, 16340 L'Isle d'Espagnac (FR)
(74) Mandataire: Dufresne, Thierry

(56) Documents cités:
- FR-A1- 2 412 055
- FR-A5- 2 171 777
- Gemac: "1D Inclination Switch with 2 switching outputs Preset to +/- 0,5°", , 25 août 2010 (2010-08-25), XP055048743, Extrait de l'Internet: URL:http://www.gemac.info/all_pdf_files/24 0xx-xx-db-e-is1a20pxx.pdf [extrait le 2013-01-07]

## Description

### Domaine technique de l'invention

La présente invention se rapporte à un détecteur à sortie astable. Le détecteur peut être de tous types connus, à sortie tout ou rien, par exemple de type photoélectrique, inductif, à ultrasons, capacitif, ou de type pressostat ou thermostat.

### Etat de la technique

Il est connu de proposer des systèmes de détection sécurisée permettant de sécuriser le fonctionnement d'une application. Par exemple, pour sécuriser l'accès à une machine située dans un local, il est connu de prévoir un système de détection sécurisée qui permet de ne pas autoriser le démarrage de la machine lorsque le moyen d'accès au local est ouvert. Un tel système de détection comporte un ou plusieurs détecteurs, une unité logique de traitement recevant l'état de chaque détecteur et un ou plusieurs actionneurs commandés par l'unité logique de traitement en tenant compte de l'état de chaque détecteur.

Lorsque le système de détection est sécurisé, il présente un certain niveau de sécurité, appelé SIL (pour "Safety Integrity Level"). Ces niveaux de sécurité sont définis par différentes normes (par exemple IEC 61508 ou IEC 62061 pour le niveau SIL2). Dans un système à niveau SIL2, chaque détecteur doit être au moins de niveau SIL2. Dans un système de détection à niveau SIL2 ou supérieur, l'une des problématiques principales est de savoir diagnostiquer les pannes sur les sorties du détecteur ainsi que sur le câble qui permet de raccorder le détecteur à l'unité logique de traitement.

Dans l'état de la technique, il a été proposé différentes solutions pour attribuer le niveau SIL2 ou supérieur à un détecteur.

Une première solution consiste à proposer un détecteur doté de deux sorties de type NO (pour "Normally Opened", c'est-à-dire normalement ouvertes) connectées à l'unité logique de traitement. Dans cette solution, le détecteur intègre un module de diagnostic lui permettant de diagnostiquer la panne de l'une des deux sorties NO et d'ouvrir l'autre sortie en cas de panne. Dans cette solution, une coupure du câble est détectée par l'unité logique de traitement et un court-circuit sur le câble est détecté par le module de diagnostic du détecteur.

Une deuxième solution consiste à proposer un détecteur doté d'une sortie NO et d'une sortie NC (pour "Normally Closed", c'est-à-dire normalement fermée). Dans cette solution, la panne de l'une des deux sorties est détectée par l'unité logique de traitement, par exemple en vérifiant la complémentarité des deux signaux de sortie. Une coupure du câble et un court-circuit sur le câble sont détectés par l'unité logique de traitement, immédiatement ou lors du changement d'état des sorties.

Une troisième solution consiste à proposer un détecteur doté d'une sortie NO et d'une entrée de test cyclique permettant à l'unité logique de traitement de vérifier la sortie du détecteur. Dans cette solution, les pannes sur la sortie du détecteur, sur le câble, ainsi que sur l'entrée de l'unité logique de traitement, sont détectées par l'unité logique de traitement lors du cycle de test.

Ces trois solutions permettent d'attribuer un niveau 2 de SIL au détecteur. Cependant, elles présentent toutes certains inconvénients listés ci-dessous :
- Présence de deux entrées sur l'unité logique de traitement dans la première et la deuxième solution.
- Module de diagnostic intégré au détecteur dans la première solution.
- Gestion d'une sortie de test et d'un cycle de test par l'unité logique de traitement dans la troisième solution.
- Emploi d'un câble à quatre fils.

Le document FR2412055 décrit un appareil comportant notamment une chaîne d'amplification et de traitement d'un signal reçu en entrée. A l'intérieur de l'appareil, des signaux initialement continus sont modulés pour pouvoir détecter les défaillances internes de l'appareil, par exemple une tension d'alimentation trop faible. Cependant, un signal continu est appliqué sur les deux sorties de sorte qu'il n'est pas possible détecter une défaillance sur la sortie ou sur le câble reliant l'appareil à un automate.

Le document FR2171777 décrit un système à générateur d'impulsions.

Le but de l'invention est donc de proposer un détecteur de sécurité, pouvant répondre à un niveau de SIL au moins égal à 2, permettant de pallier les inconvénients de l'état de la technique listés ci-dessus. Le détecteur de l'invention ne nécessite pas la présence de deux entrées sur l'unité logique de traitement, ni la présence d'un module interne de diagnostic intégré dans le capteur.

### Exposé de l'invention

Ce but est atteint par un détecteur à sortie tout ou rien, dédié à des applications de sécurité fonctionnelle, ledit détecteur comportant :
- un organe capteur,
- un étage de détection connecté à l'organe capteur et destiné à générer un signal de détection représentatif, selon la position d'une cible par rapport au détecteur, d'un état de détection sûr ou d'un état de détection non sûr,
- un étage de traitement recevant le signal de détection et destiné à générer un premier signal de sortie dans l'état de détection sûr ou un deuxième signal de sortie, différent du premier signal de sortie, dans l'état de détection non sûr,
- l'étage de traitement étant agencé pour délivrer le premier signal de sortie sous forme astable dans l'état de détection sûr.

Selon l'invention, le deuxième signal de sortie est un signal astable présentant un rapport cyclique et/ou une fréquence différente de celui du premier signal de sortie astable.

Selon une particularité, le premier signal de sortie est représentatif d'un code d'identification généré selon un protocole série.

Selon une autre particularité, le premier signal de sortie sous forme astable est généré pour une détection ou une non-détection de la cible devant le détecteur.

Selon une autre particularité, le détecteur comporte deux bornes d'alimentation et une seule borne de sortie à laquelle est connectée une sortie logique du détecteur commandée par le premier signal de sortie ou le deuxième signal de sortie.

### Brève description des figures

D'autres caractéristiques et avantages vont apparaître dans la description détaillée qui suit faite en regard des dessins annexés dans lesquels :

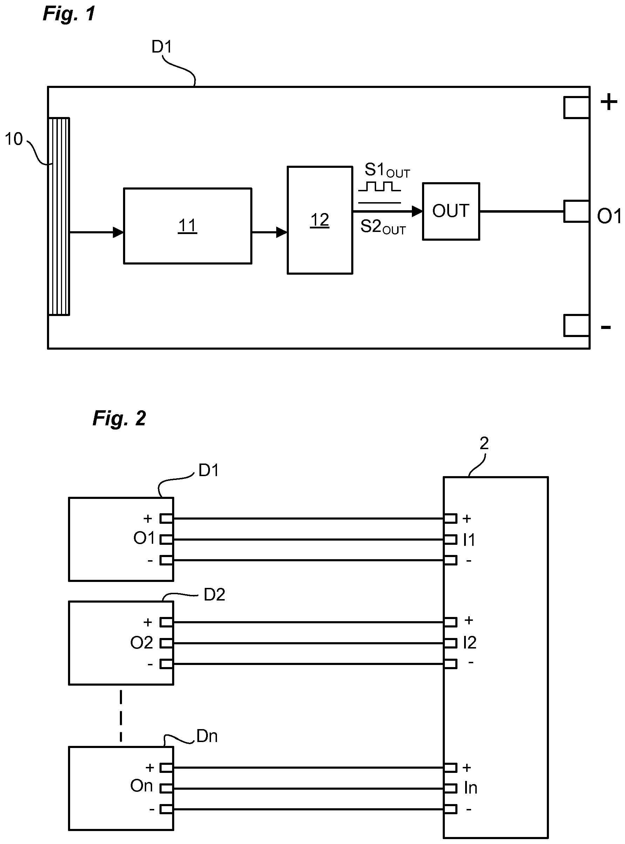

- la figure 1 représente, de manière schématique, l'agencement fonctionnel d'un détecteur de l'invention,
- la figure 2 représente un système de détection comportant une unité logique de traitement et un détecteur de l'invention connecté à l'unité logique de traitement,
- les figures 3 et 4 montrent des exemples non revendiqués,
- les figures 5 à 7 illustrent différentes configurations de fonctionnement du détecteur de l'invention,
- la figure 8 illustre une autre configuration du premier signal de sortie..

### Description détaillée d'au moins un mode de réalisation

L'invention concerne un détecteur de sécurité et le système de détection intégrant ledit détecteur de sécurité.

Le détecteur de sécurité de l'invention est agencé pour présenter un niveau de sécurité SIL au moins égal à 2.

Le détecteur D1 est connecté par un câble de raccordement à une unité logique de traitement 2 afin de former un système de détection sécurisée. L'unité logique de traitement fournit par exemple l'alimentation au détecteur via ledit câble qui est connecté à deux bornes d'alimentation (+ et -) présentes sur le détecteur D1.

Pour la suite de la description, on définit un état de détection sûr et un état de détection non sûr. Dans l'état de détection sûr, le détecteur D1 est agencé pour générer un premier signal de sortie S1_{OUT} qui est interprété par l'unité logique de traitement 2 comme une autorisation de fonctionnement de l'application sécurisée. Dans l'état de détection non sûr, le détecteur D1 est agencé pour générer un deuxième signal de sortie S2_{OUT} qui est interprété par l'unité logique de traitement 2 et provoque la mise en sécurité de l'application sécurisée.

Selon la configuration de l'application à sécuriser, l'état de détection sûr peut correspondre à la détection de la cible devant le détecteur ou à la non détection de la cible devant le détecteur. De même, l'état de détection non sûr peut correspondre à la détection de la cible devant le détecteur ou à la non détection de la cible devant le détecteur.

Le détecteur D1 de l'invention peut être de tous types connus, à sortie tout ou rien, tels que par exemple inductif, capacitif, à ultrasons ou photoélectrique, voire des pressostats ou thermostats. Le détecteur comporte donc un organe capteur 10 adapté pour remplir sa fonction.

Le détecteur D1 comporte un étage de détection 11 connecté à l'organe capteur 10 et destiné à générer un signal de détection représentatif de l'état de détection sûr ou de l'état de détection non sûr. En sortie de l'étage de détection, le signal de détection est préférentiellement binaire.

Le détecteur D1 comporte un étage de traitement 12 connecté à l'étage de détection et destiné à générer le premier signal de sortie S1_{OUT} ou le deuxième signal de sortie S2_{OUT} correspondant au signal de détection et donc représentatif de l'état de détection sûr ou de l'état de détection non sûr.

Selon l'invention, le détecteur D1 comporte une seule sortie OUT logique commandée, par l'intermédiaire d'un dispositif de commande, par le premier signal de sortie S1_{OUT} ou le deuxième signal de sortie S2_{OUT} et connectée à une seule borne de sortie O1. La sortie logique comporte par exemple un transistor de type PNP ou NPN.

Comme le détecteur D1 ne comporte qu'une seule borne de sortie O1, il peut être connecté à une unité logique de traitement 2 qui comporte une seule entrée I1. Par exemple, pour n détecteurs (D1,... Dn), l'unité logique de traitement 2 n'aura besoin que de n entrées (I1,... In). Le détecteur D1 est relié à l'unité logique de traitement par un câble à trois fils, deux des fils étant réservés à l'alimentation (+ et -) du détecteur D1 et le troisième fil à la circulation du premier signal de sortie S1_{OUT} ou du deuxième signal de sortie S2_{OUT}.

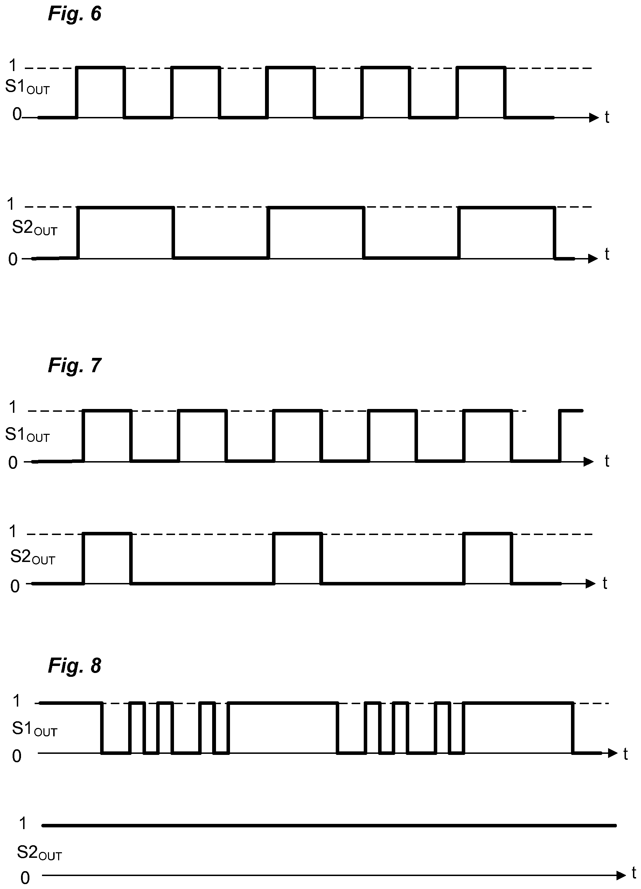

Selon l'invention, comme le détecteur D1 de sécurité ne comporte qu'une seule sortie OUT logique, le premier signal de sortie S1_{OUT} qui est généré dans l'état de détection sûr, est de type astable. Dans l'état de détection sûr, la sortie OUT du détecteur D1 passe en permanence de l'état 1 à l'état 0 à une fréquence fixe ou variable, suivant un rapport cyclique fixe ou variable. Ces changements d'état peuvent également permettre la transmission d'un code numérique d'identification généré selon un protocole série. La figure 8 représente la transmission d'un tel code d'identification en faisant varier la sortie entre les deux états. Le code transmis sera interprété par l'unité logique de traitement 2.

Le détecteur de l'invention ne nécessite pas impérativement de module interne de diagnostic. La génération d'un signal de sortie astable permet de tester la sortie du détecteur, le câble ainsi que l'entrée de l'unité logique de traitement à laquelle est connecté le détecteur.

L'unité logique de traitement 2 est agencée pour traiter le premier signal de sortie de type astable généré par le détecteur dans l'état de détection sûr.

Dans l'état de détection non sûr, le deuxième signal de sortie S2_{OUT} généré par l'étage de traitement peut prendre différentes configurations.

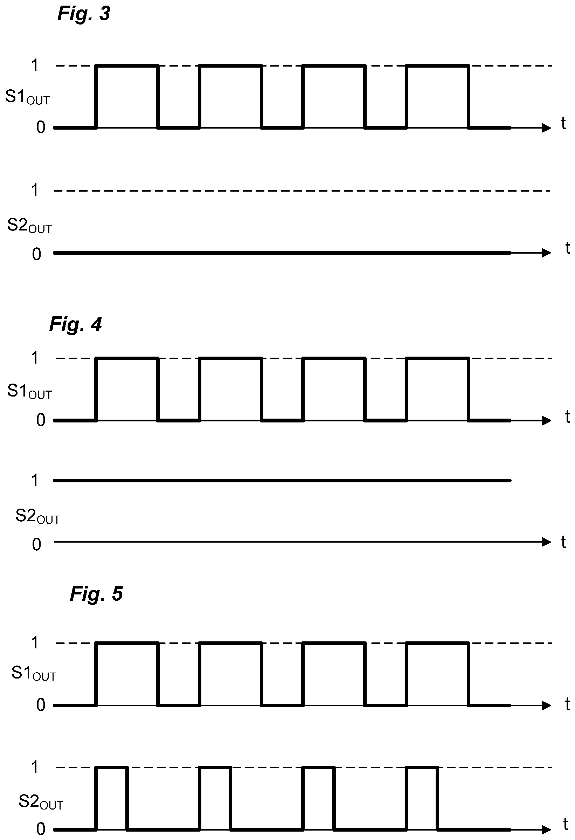

Dans un premier exemple non revendiqué représenté à la figure 3, le deuxième signal de sortie S2_{OUT}, généré dans l'état de détection non sûr, est un signal stable fixé à 0.

Dans un deuxième exemple non revendiqué représenté à la figure 4, le deuxième signal de sortie S2_{OUT}, généré dans l'état de détection non sûr, est un signal stable fixé à 1.

Dans les configurations représentées sur les figures 5, 6 et 7, le deuxième signal de sortie S2_{OUT}, généré dans l'état de détection non sûr, est également un signal astable, comme le premier signal de sortie S1_{OUT}. Il se différencie alors du premier signal de sortie S1_{OUT} par sa fréquence (figure 6), par son rapport cyclique (figure 5) ou par sa fréquence et son rapport cyclique (figure 7). Dans ces configurations, il est ainsi possible de distinguer l'état de détection non sûr d'une panne sur la sortie, sur le câble ou sur l'entrée I1 de l'unité logique de traitement 2.

## Revendications

1. Détecteur (D1) à sortie tout ou rien, dédié à des applications de sécurité fonctionnelle, ledit détecteur comportant :
- un organe capteur (10),
- un étage de détection (11) connecté à l'organe capteur (10) et destiné à générer un signal de détection représentatif, selon la position d'une cible par rapport au détecteur, d'un état de détection sûr ou d'un état de détection non sûr,
- un étage de traitement (12) recevant le signal de détection et destiné à générer un premier signal de sortie (S1_{OUT}) dans l'état de détection sûr ou un deuxième signal de sortie (S2_{OUT}), différent du premier signal de sortie (S1_{OUT}), dans l'état de détection non sûr,
- l'étage de traitement (12) étant agencé pour délivrer le premier signal de sortie (S1_{OUT}) sous forme astable dans l'état de détection sûr,
**caractérisé en ce que** le deuxième signal de sortie (S2_{OUT}) est un signal astable présentant un rapport cyclique et/ou une fréquence différente de celui du premier signal de sortie (S1_{OUT}) astable.

2. Détecteur selon la revendication 1, **caractérisé en ce que** le premier signal de sortie (S1_{OUT}) est représentatif d'un code d'identification généré selon un protocole série.

3. Détecteur selon l'une des revendications 1 à 2, **caractérisé en ce que** le premier signal de sortie (S1_{OUT}) sous forme astable est généré pour une détection ou une non-détection de la cible devant le détecteur.

4. Détecteur selon l'une des revendications 1 à 3, **caractérisé en ce qu'**il comporte deux bornes d'alimentation (+, -) et une seule borne de sortie (O1) à laquelle est connectée une sortie (OUT) logique du détecteur commandée par le premier signal de sortie (S1_{OUT}) ou le deuxième signal de sortie (S2_{OUT}).

## Patentansprüche

1. Detektor (D1) mit Ein-Aus-Ausgang, für funktionale Sicherheitsanwendungen, wobei der Detektor umfasst:
- ein Sensorelement (10),
- eine Detektorstufe (11) die mit dem Sensorelement (10) verbunden und dazu bestimmt ist, ein Detektionssignal zu erzeugen, das abhängig von der Position eines Ziels relativ zum Detektor für einen sicheren Detektionszustand oder einen unsicheren Detektionszustand steht,
- eine Verarbeitungsstufe (12), die das Detektionssignal empfängt und die dazu bestimmt ist, ein erstes Ausgangssignal (S1_{OUT}) in dem sicheren Detektionszustand oder ein zweites Ausgangssignal (S2_{OUT}), das von dem ersten Ausgangssignal (S1_{OUT}) verschieden ist, in dem unsicheren Detektionszustand zu erzeugen,
- wobei die Verarbeitungsstufe (12) eingerichtet ist, um das erste Ausgangssignal (S1_{OUT}) in astabiler Form in dem sicheren Detektionszustand bereitzustellen,
**dadurch gekennzeichnet, dass** das zweite Ausgangssignal (S2_{OUT}) ein astabiles Signal ist, das ein Tastverhältnis und/oder eine Frequenz aufweist, die von der des ersten astabilen Ausgangssignals (S1_{OUT}) verschieden ist.

2. Detektor nach Anspruch 1, **dadurch gekennzeichnet, dass** das erste Ausgangssignal (S1_{OUT}) für einen Identifikationscode steht, der gemäß einem seriellen Protokoll erzeugt wurde.

3. Detektor nach einem der Ansprüche 1 bis 2, **dadurch gekennzeichnet, dass** das erste Ausgangssignal (S1_{OUT}) in astabiler Form für eine Detektion oder eine Nicht-Detektion des Ziels vor dem Detektor erzeugt wird.

4. Detektor nach einem der Ansprüche 1 bis 3, **dadurch gekennzeichnet, dass** er zwei Versorgungsanschlüsse (+, -) und einen einzigen Ausgangsanschluss (O1) umfasst, an den ein logischer Ausgang (OUT) des Detektors angeschlossen ist, der durch das erste Ausgangssignal (S1_{OUT}) oder das zweite Ausgangssignal (S2_{OUT}) gesteuert wird.

## Claims

1. Detector (D1) with digital output, dedicated to operational safety applications, said detector comprising:
- a sensor member (10),
- a detection stage (11) connected to the sensor member (10) and intended to generate a detection signal representative, depending on the position of a target relative to the detector, of a safe detection state or of an unsafe detection state,
- a processing stage (12) receiving the detection signal and intended to generate a first output signal (S1_{OUT}) in the safe detection state or a second output signal (S2_{OUT}), different from the first output signal (S1_{OUT}), in the unsafe detection state,
- the processing stage (12) being arranged to deliver the first output signal (S1_{OUT}) in an astable form in the safe detection state,
**characterized in that** the second output signal (S2_{OUT}) is an astable signal exhibiting a duty cycle and/or a frequency different from that of the first astable output signal (S1_{OUT}).

2. Detector according to Claim 1, **characterized in that** the first output signal (S1_{OUT}) is representative of an identification code generated according to a serial protocol.

3. Detector according to one of Claims 1 to 2, **characterized in that** the first output signal (S1_{OUT}) in astable form is generated for a detection or a non-detection of the target in front of the detector.

4. Detector according to one of Claims 1 to 3, **characterized in that** it comprises two power supply terminals (+, -) and a single output terminal (O1) to which is connected a logic output (OUT) of the detector controlled by the first output signal (S1_{OUT}) or the second output signal (S2_{OUT}).
